# EUROPEAN PATENT SPECIFICATION

(11) **EP 1 071 335 B1**
(45) Date of publication and mention of the grant of the patent: **26.02.2003**
(21) Application number: 99918258.7
(22) Date of filing: 31.03.1999
(51) Int. Cl.: A01N 65/00

(54) **AN ENVIRONMENT FRIENDLY ACARICIDE FORMULATION**
UMWELTFREUNDLICHE AKARIZIDE FORMULIERUNG
FORMULATION ACARICIDE SANS DANGER POUR L'ENVIRONNEMENT

(30) Priority: 17.04.1998 IN Ma082798
(43) Date of publication of application: 31.01.2001
(73) Proprietor: Subba Rao, Pillarisetti Venkata, Bangalore 560 003 (IN); Annadurai, Ramasamy Sambasivam, Bangalore 560 070 (IN); Srinivas, Malladi, Bangalore 560 085 (IN)
(72) Inventor: Subba Rao, Pillarisetti Venkata, Bangalore 560 003 (IN); Annadurai, Ramasamy Sambasivam, Bangalore 560 070 (IN); Srinivas, Malladi, Bangalore 560 085 (IN)
(74) Representative: Robson, Aidan John
(86) International application number: IN9900011
(87) International publication number: WO99053763

(56) References cited:
- EP-A1- 0 405 291
- DE-A1- 19 532 447
- US-A- 5 405 612
- DATABASE WPI Week 9408, Derwent Publications Ltd., London, GB; Class B04, AN 1994-061960 & JP 6 016 515 A (NIPPON KAYAKU KK)

## Description

This invention relates to an environment friendly acaricidal formulation for the control of house dust mite populations in the domestic environment responsible for high incidence of respiratory allergies and process of preparing the same.

### BACKGROUND

The major culprits for dust allergy are mites (*Dermatophagoides farinae and D. pteronyssinus)* prevalent in house dust. Universally, dust mites are minute co-inhabitants in almost every household and cannot be seen with the naked eye. They are found in almost all home furnishing textiles and their favourite places are mattresses, cushions, carpets, upholstery and soft toys. The reactions in hypersensitive people range from itchy and watery eyes, repeated sneezes and running nose. cough and bronchial asthma to childhood eczema. The dust on which they thrive may comprise cotton, wool lint, animal and human dander. crumbs, pollens, molds, etc.

House dust mites principally feed on human scales which are primarily found in mattresses. Bedding, carpets etc. During occupation, the temperature and humidity of the human body provides an ideal microclimate in the mattresses for dust mites. Development from egg through larva, protonymph, tritonymph to adult requires about a month in culture, under optimal conditions. An adult mite can live up to three months. Their food comprises protein particles and fungi present in the dust.

Mites may occasionally become airbone during bed-making. It has also been demonstrated that they secrete or release some allergens during bed-making. The allergen may comprise mites, eggs. dead mites and their excreta. A gram of dust mite may contain up to 1000 mites.

Most particles of the faeces, whose physical properties are similar to pollen are deposited on the nasal mucosa and carried to the lungs causing localized inflammatory responses because of the high concentration of allergen.

Control of mite population in the domestic environment is the best method of preventing house dust allergy. The degree of cleanliness determines the number of house dust mites and the allergen level. Common control measures include vacuum cleaning. treating the carpets and bed spreads with insecticides. acaricides and fungicides. Reducing the mite population by interfering with the food chain has also been practised. However, a safe, environment friendly and effective formulation based on natural products for the control of house dust mite is not yet commercially available.

### PRIOR ART

A few formulations are commercially available like Acardust, Acaroson. Allerbiocid etc., containing benzyl benzoate, the chief acaricidal agent in these formulation is toxic at higher concentrations to humans as well as to pets. As the effective concentration of benzyl benzoate used in these formulations is very high, its wide spread use as a domestic acaricide could be harmful.

In one acaricidal formulation, derivatives of phenols in combination with several natural oils have been used as the active acaricidal agent in combination with an antibiotic Natamycin as a fungicide. But the wide-spread use of phenolic derivatives and essential oils is not safe from the physiological and odour point of view. Moreover, the fungicide as such can not destroy the mites.

Apart from this, a few chemicals like benzyl alcohol, primiphos methyl, dibutyl phthalate, gama-hexachlorocyclohexane and diethyl-m-toluamide have been reported in literature as miticides. But from the toxicology and environmental safety point of view their use is not recommended.

Accordingly, the **object** of this invention is to provide an environment friendly acaricidal formulation for domestic use which should have the following characteristics:
- All the chemicals used should be safe from the toxicology point of view.
- Should have multiple modes of action i.e., it should control the mite population, prevent the growth of fungi, reduce the existing allergen levels, act as a disinfectant as well as prevent the mites from developing resistance to these chemicals.
- Should not have an offensive odour.
   Further, re-establishment of house dust mites after treatment with acaricides is the common problem due to the existence of nymph and eggs. Moreover, the miticide cannot reach the deeper layers of carpets and upholstery.
   Accordingly, the second **object** of this invention is to control the mites and prevent their re-establishment by preparing the composition which cannot only kill the adult mites but also be an ovicide and a larvicide.

To achieve the said objectives this invention provides an environment friendly acaricides formulation composition characterized by:

| | | |
|---|---|---|
| - | Neem seed kernel extract containing Azadirachtin, azadirachtin A of 2-90% enrichment | 0.01-0.1%wt./vol. |
| - | Alcoholic extract of resins | 0.1-3%wt./vol. |
| - | Plant Polyphenols | 0.1-2%wt./vol. |
| - | Fungicides as herein defined and | 0.1-3%wt./vol. |
| - | alcohol having carbon atoms C₁-C₆ | 99.69-91 %wt./vol. |

The neem seed kernel extract contains azadirachtin / azadirachtin A of 20-35% enrichment.

The neem seed kernel extract contains limonoids like nimbin, salannin, desacetylnimbin, desacetylsalannin, nimbandiol, azadirachtin-B and salannolacetate for preventing the mites from developing resistance against the active ingredient.

The alcoholic extract of resins includes stryax benzoin and said plant polyphenols includes tannic acid, condensed tannins, phenolic compounds like gallic acid and phloroglucinol.

The fungistatic agents are fungicides used in food industry like natamycin, nipagin and the dispersing agents are ethanol, methanol and isopropyl alcohol.

The ingredients viz. plant derived acaricidal agent, plant-derived disinfectant agent, plant-derived protein denaturant and fungistatic agent of this composition are solids which are dissolved in an alcoholic solvent (dispersing agent) to give a clear pale brown coloured solution.

The invention will now be described with reference to the following examples.

| **EXAMPLE - 1** | | |
|---|---|---|
| **S. No.** | **Ingredients** | **Weight/volume (%)** |
| 1. | Neem seed kernel extract containing azadirachtin of 20% enrichment | 0.1 |
| 2. | Alcoholic extract of benzoin resin | 3.0 |
| 3. | Tannic acid | 1.0 |
| 4. | Nipagin | 1.0 |
| 5. | Ethanol | 94.9 |

| **EXAMPLE - 2** | | |
|---|---|---|
| **S. No.** | **Ingredients** | **Weight/volume (%)** |
| 1. | Neem seed kernel extract containing azadirachtin of 35% enrichment | 0.1 |
| 2. | Alcoholic extract of benzoin resin | 3.0 |
| 3. | Tannic acid | 1.0 |
| 4. | Nipagin | 1.0 |
| 5. | Ethanol | 94.9 |

| **EXAMPLE - 3** | | |
|---|---|---|
| **S. No.** | **Ingredients** | **Weight/volume (%)** |
| 1. | Neem seed kernel extract containing azadirachtin of 90% enrichment | 0.1 |
| 2. | Alcoholic extract of benzoin resin | 3.0 |
| 3. | Tannic acid | 1.0 |
| 4. | Nipagin | 1.0 |
| 5. | Ethanol | 94.9 |

| **EXAMPLE - 4** | | |
|---|---|---|
| **S. No.** | **Ingredients** | **Weight/volume (%)** |
| 1. | Neem seed kernel extract containing azadirachtin of 2% enrichment | 0.1 |
| 2. | Alcoholic extract of benzoin resin | 3.0 |
| 3. | Tannic acid | 1.0 |
| 4. | Nipagin | 1.0 |
| 5. | Ethanol | 94.9 |

| **EXAMPLE - 5** | | |
|---|---|---|
| **S. No.** | **Ingredients** | **Weight/volume (%)** |
| 1. | Neem seed kernel extract containing azadirachtin of 20% enrichment | 0.1 |
| 2. | Alcoholic extract of benzoin resin | 3.0 |
| 3. | Tannic acid | 1.0 |
| 4. | Nipagin | 1.0 |
| 5. | Isopropyl alcohol | 94.9 |

| **EXAMPLE - 6** | | |
|---|---|---|
| **S. No.** | **Ingredients** | **Weight/volume (%)** |
| 1. | Neem seed kernel extract containing azadirachtin of 35% enrichment | 0.1 |
| 2. | Alcoholic extract of benzoin resin | 3.0 |
| 3. | Tannic acid | 1.0 |
| 4. | Nipagin | 1.0 |
| 5. | Isopropyl alcohol | 94.9 |

| **EXAMPLE - 7** | | |
|---|---|---|
| **S. No.** | **Ingredients** | **Weight/volume (%)** |
| 1. | Neem seed kernel extract containing azadirachtin of 90% enrichment | 0.1 |
| 2. | Alcoholic extract of benzoin resin | 3.0 |
| 3. | Tannic acid | 1.0 |
| 4. | Nipagin | 1.0 |
| 5. | Isopropyl alcohol | 94.9 |

| **EXAMPLE - 8** | | |
|---|---|---|
| **S. No.** | **Ingredients** | **Weight/volume (%)** |
| 1. | Neem seed kernel extract containing azadirachtin of 2% enrichment | 0.1 |
| 2. | Alcoholic extract of benzoin resin | 3.0 |
| 3. | Tannic acid | 1.0 |
| 4. | Nipagin | 1.0 |
| 5. | Isopropyl alcohol | 94.9 |

### Conclusion:

The composition in Table 2 is very efficient in terms of speed of action and mite elimination. The total adult population is immobilized within an hour of treatment. A biweekly spray of 200 µl/100mg of the culture is required for 8 weeks to completely eliminate the population. Reestablishment on treated areas is totally prevented after 8 weeks. After eradication a biweekly prophylactic spray can contain population build up.

## Claims

1. An environment friendly acaricides formulation composition **characterized by**:
| | | |
|---|---|---|
| - | Neem seed kernel extract containing Azadirachtin, azadirachtin A of 2-90% enrichment | 0.01-0.1%wt./vol. |
| - | Alcoholic extract of resins | 0.1-3%wt./vol. |
| - | Plant Polyphenols | 0.1-2%wt./vol. |
| - | Fungicides as herein defined and | 0.1-3%wt./vol. |
| - | alcohol having carbon atoms C₁-C₆ | 99.69-91 %wt./vol. |

2. Formulation as claimed in claim 1 wherein said plant-derived acaricidal agent is neem seed kernel extract containing azadirachtin /azadirachtin A preferably of 20-35% enrichment.

3. Formulation as claimed in claim 2 wherein said neem seed kernel extract contains limonoids like nimbin, salannin, desacetylnimbin, desacetylsalannin, nimbandiol, azadirachtin-B and salannolacetate for preventing the mites from developing resistance against the active ingredient.

4. Formulation as claimed in 1 wherein said alcoholic extract of resins includes stryax benzoin.

5. Formulation as claimed in claim 1 wherein said plant polyphenols includes tannic acid, condensed tannin, phenolic compounds like gallic acid and phloroglucinol.

6. Formulation as claimed in claim 1 wherein said fungicides includes natamycin, nipagin.

7. Formulation as claimed in claim 1 wherein said alcohol includes ethanol, methanol, isopropyl alcohol.

## Patentansprüche

1. Umweltfreundliche Akarizid-Formulierungszusammensetzung, **gekennzeichnet durch**:
| | | |
|---|---|---|
| - | Neemsamenkern-Extrakt mit Azadirachtin, Azadirachtin A mit 2-90%iger Anreicherung | 0,01-0,1 Gew.-/Vol.-% |
| - | Alkoholextrakt von Harzen | 0,1-3 Gew.-/Vol.-% |
| - | pflanzliche Polyphenole | 0,1-2 Gew.-/Vol.-% |
| - | Fungizide wie hierin definiert und | 0,1-3 Gew.-/Vol.-% |
| - | Alkohol mit C₁-C₆ Kohlenstoffatomen | 99,69-91 Gew.-/Vol.-% |

2. Formulierung nach Anspruch 1, wobei das genannte Akarizidmittel pflanzlicher Abstammung Neemsamenkern-Extrakt ist, der Azadirachtin/Azadirachtin A, vorzugsweise mit 20-35%iger Anreicherung, enthält.

3. Formulierung nach Anspruch 2, wobei der genannte Neemsamenkern-Extrakt Limonoide wie Nimbin, Salannin, Desacetylnimbin, Desacetylsalannin, Nimbandiol, Azadirachtin-B und Salannolacetat enthält, um Milben daran zu hindern, eine Resistenz gegen den Wirkstoff zu entwickeln.

4. Formulierung nach Anspruch 1, wobei der genannte Alkoholextrakt von Harzen Stryax-Benzoin enthält.

5. Formulierung nach Anspruch 1, wobei die genannten pflanzlichen Polyphenole Tannin, kondensiertes Tannin, Phenolverbindungen wie Gallussäure und Phloroglucinol beinhalten.

6. Formulierung nach Anspruch 1, wobei die genannten Fungizide Natamycin, Nipagin beinhalten.

7. Formulierung nach Anspruch 1, wobei der genannte Alkohol Ethanol, Methanol, Isopropylalkohol beinhaltet.

## Revendications

1. Composition pour la formulation d'acaricides non nuisibles à l'environnement, **caractérisée par** :
| | | |
|---|---|---|
| - | un extrait d'amandes de semences de Neem contenant de l'azadirachtin, de l'azadirachtin A à un enrichissement de 2-90% | 0,01-0,1% en poids par volume |
| - | un extrait alcoolique de résines | 0,1-3% en poids par volume |
| - | des polyphénols de plantes | 0,1-2% en poids par volume |
| - | des fongicides tels que définis aux présentes | 0,1-3% en poids par volume |
| - | de l'alcool ayant des atomes de carbone C₁-C₆ | 99,69-91% en poids par volume |

2. Formulation telle que revendiquée dans la revendication 1, dans laquelle ledit agent acaricide dérivé de plantes est un extrait d'amandes de semences de Neem contenant de l'azadiractin/azadiractin A de préférence à un enrichissement de 20-35%.

3. Formulation telle que revendiquée dans la revendication 2, dans laquelle ledit extrait d'amandes de semences de Neem contient des limonoïdes comme le nimbin, le salannin, le désacétyl-nimbin, le désacétyl-salannin, le nimbandiol, l'azadiractin-B et le salannolacétate, pour empêcher les acariens de développer une résistance contre l'ingrédient actif.

4. Formulation telle que revendiquée dans 1, dans laquelle ledit extrait alcoolique de résines comprend du Styrax benzoin.

5. Formulation telle que revendiquée dans la revendication 1, dans laquelle lesdits polyphénols de plantes comprennent de l'acide tannique, du tanin condensé, des composés phénoliques comme de l'acide gallique et du phloroglucinol.

6. Formulation telle que revendiquée dans la revendication 1, dans laquelle lesdits fongicides comprennent de la natamycine, de la nipagine.

7. Formulation telle que revendiquée dans la revendication 1, dans laquelle ledit alcool comprend de l'éthanol, du méthanol, de l'alcool isopropylique.
